# EUROPÄISCHE PATENTANMELDUNG

(11) **EP 1 074 408 A2**
(43) Veröffentlichungstag der Anmeldung: **07.02.2001**
(21) Anmeldenummer: 00113209.1
(22) Anmeldetag: 21.06.2000
(51) Int. Cl.: B60H 1/00, B60H 1/24

(54) **Fahrzeugboden eines Personenkraftwagens**

(30) Priorität: 05.08.1999 DE 19936881
(71) Anmelder: DaimlerChrysler AG, 70567 Stuttgart (DE)
(72) Erfinder: Felsen, Hans-Jürgen, Dr., 70597 Stuttgart (DE)

(57) **Zusammenfassung**

Die Erfindung betrifft einen Fahrzeugboden eines Personenkraftwagens mit einer Bodenplatte (2), mit einem auf die Bodenplatte aufgebrachten, schalldämmenden Bodenbelag (3) und mit einem Klimakanal (9), der sich im Bodenbelag erstreckt, einen in den Fahrzeugfond einmündenden Kanalaustritt aufweist und klimatisierte Luft von einer Klimatisierungseinrichtung des Fahrzeuges in den Fahrzeugfond leitet.

Um die Schalleinleitung durch den Klimakanal in den Fahrzeugfond zu reduzieren, wird erfindungsgemäß vorgeschlagen, daß der Klimakanal in einem sich zwischen der Klimatisierungseinrichtung und dem Kanalaustritt (11) erstreckenden Abschnitt (12) ausschließlich aus einem schall- und schwingungsdämpfenden Material, z.B. aus einem offenporigen Schaumstoff besteht.

## Beschreibung

Die Erfindung betrifft einen Fahrzeugboden eines Personenkraftwagens mit den Merkmalen des Oberbegriffes des Anspruches 1.

Üblicherweise weist ein Fahrzeugboden eines Personenkraftwagens eine Bodenplatte auf, auf die ein schalldämmender Bodenbelag aufgebracht ist. Bei komfortableren Personenkraftwagen ist in diesem Bodenbelag ein Klimakanal verlegt, der einen in den Fahrzeugfond einmündenden Kanalaustritt aufweist und dazu dient, klimatisierte Luft von einer Klimatisierungseinrichtung des Fahrzeuges in den Fahrzeugfond zu leiten.

Durch einen solchen Klimakanal kann jedoch auch Schall in den Fondbereich des Fahrzeuginnenraumes eintreten, der beispielsweise im Bereich von Lufteinlaßöffnungen in die Klimatisierungseinrichtung eintritt oder in der Klimatisierungseinrichtung selbst, z.B. durch einen Gebläsemotor, erzeugt wird. Um diesen durch den Klimakanal verursachten Anstieg des Lärmpegels im Fahrzeuginnenraum zu reduzieren, ist es aus der EP 0 338 908 B1 bekannt, einen aus einem steifen Kunststoff bestehenden Kern des Klimakanals sowohl auf seiner Innenseite als auch auf seiner Anßenseite mit einer schalldämmenden Schicht aus Schaum zu versehen.

Die vorliegende Erfindung beschäftigt sich mit dem Problem, für einen Fahrzeugboden der eingangs genannten Art eine andere Ausführungsform anzugeben, bei der die Schallübertragung durch den Klimakanal in den Fahrzeuginnenraum reduziert ist.

Dieses Problem wird erfindungsgemäß durch einen Fahrzeugboden mit den Merkmalen des Anspruches 1 gelöst.

Die Erfindung beruht auf dem allgemeinen Gedanken, im Klimakanal einen Abschnitt auszubilden, der die daran angrenzenden Abschnitte, insbesondere den Kanalaustritt und einen Anschluß des Klimakanals, mit dem dieser an die Klimatisierungseinrichtung angeschlossen ist, hinsichtlich der Übertragung von Schwingungen entkoppelt. Zu diesem Zweck wird vorgeschlagen, diesen Kanalabschnitt ausschließlich aus einem schall- und schwingungsdämpfenden Werkstoff auszubilden. Die Erfindung nutzt dabei die Erkenntnis, daß bei einem herkömmlichen Klimakanal neben Luftschall auch Körperschall übertragen wird. Diese Übertragung von Körperschall erfolgt dabei einerseits von der Klimatisierungseinrichtung über den Klimakanal auf den Kanalaustritt, von wo aus sich der Schall auf eine üblicherweise trittfest ausgebildete Oberschicht des Bodenbelages ausbreitet und diese zu Schwingungen und somit zur Schallabstrahlung anregt. Zum anderen bildet ein herkömmlicher Klimakanal eine Körperschallbrücke zwischen der Bodenplatte und der trittfesten Oberschicht des Bodenbelages, durch die der in den Bodenbelag eingeleitete bzw. darin erzeugte Körperschall eine zwischen Bodenplatte und Oberschicht angeordnete schalldämmende Dämmschicht des Bodenbelages umgeht und sich auf die trittfeste Oberschicht des Bodenbelages überträgt. Durch die erfindungsgemäß vorgeschlagene Ausbildung des schalldämpfend und schwingungsdämpfend wirkenden Kanalabschnittes wird sowohl die Körperschallkopplung zwischen der Klimatisierungseinrichtung und dem Kanalaustritt bzw. der trittfesten Bodenbelagsschicht als auch die Körperschallkopplung zwischen der Bodenplatte und der trittfesten Bodenbelagsschicht aufgehoben bzw. vermindert.

Gemäß einer besonders vorteilhaften Ausführungsform des erfindungsgemäßen Fahrzeugbodens kann der aus dem schall- und schwingungsdämpfenden Material bestehende Klimakanalabschnitt durch eine Aussparung im Bodenbelag bzw. in dessen zwischen der trittfesten Oberschicht und der Bodenplatte angeordneter Dämmschicht ausgebildet sein, da bei einem schalldämmenden Bodenbelag die Dämmschicht üblicherweise auch die erforderliche Schall- und Schwingungsdämpfungseigenschaft aufweist. Eine derartige Ausführungsform ermöglicht eine Materialeinsparung, die bei einer Großserienfertigung stets angestrebt ist.

Es ist klar, daß die durch die Erfindung erzielte Reduzierung der Schallübertragung durch den Klimakanal um so besser wird, je größer der erfindungsgemäß ausgestaltete Klimakanalabschnitt ausgebildet ist. Vorzugsweise erstreckt sich dieser dämpfende Klimakanalabschnitt zwischen zwei Sitzquerträgern, die einen Vordersitz des Fahrzeuges unterstützen.

Weitere wichtige Merkmale und Vorteile des erfindungsgemäßen Fahrzeugbodens ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch einen Teil eines erfindungsgemäß ausgestalteten Fahrzeugbodens eines im übrigen nicht dargestellten Personenkraftwagens in einer ersten Ausführungsform und
- Fig. 2: einen Längsschnitt wie in Fig. 1, jedoch einer zweiten Ausführungsform.

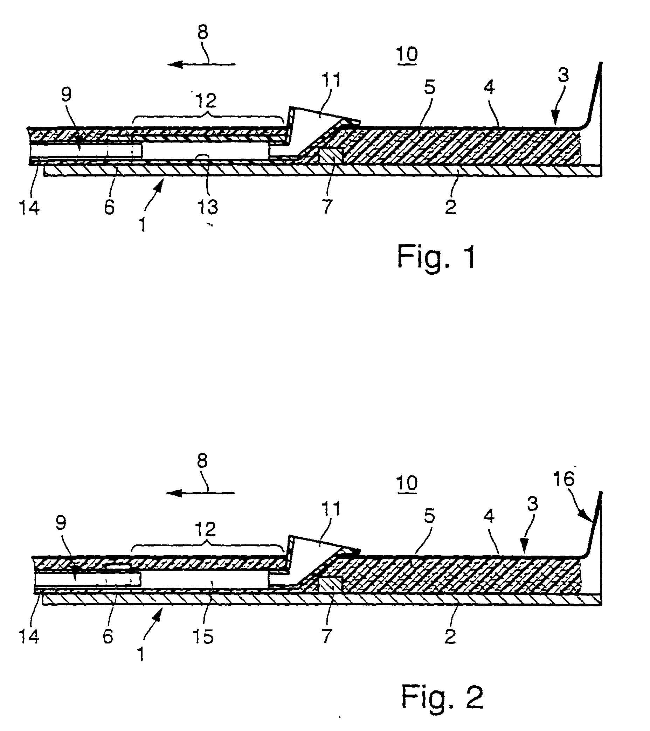

Entsprechend den Fig. 1 und 2 besteht ein Fahrzeugboden 1 nach der Erfindung aus einer Bodenplatte 2, durch die ein Fahrzeuginnenraum trittfest bzw. betretbar wird. Üblicherweise wird diese Bodenplatte 2 aus einem Stahl- oder Aluminiumblech gebildet. Auf die Bodenplatte 2 ist ein schalldämmender Bodenbelag 3 aufgebracht, der auf seiner dem Innenraum zugewandten Oberseite eine nach Art eines Teppichs ausgebildete, trittfeste Oberschicht 4 und eine zwischen dieser Oberschicht 4 und der Bodenplatte 2 angeordnete Dämmschicht 5 aufweist.

Innerhalb des Fahrzeugbodens 1 verlaufen zwei Sitzquerträger, nämlich ein vorderer Sitzquerträger 6 und ein hinterer Sitzquerträger 7, die beide zur Befestigung und Unterstützung eines nicht dargestellten Vordersitzes des Fahrzeuges dienen. In einem bezüglich der mit einem Pfeil 8 gekennzeichneten Fahrtrichtung vorderen Abschnitt des Fahrzeugbodens 1 verläuft im Inneren des Bodenbelages 3 bzw. innerhalb der Dämmschicht 5 ein Klimakanal 9, der klimatisierte, z.B. erwärmte oder getrocknete, Luft von einer nicht dargestellten, im vorderen Fahrzeugbereich untergebrachten Klimatisierungseinrichtung in einen Fondbereich 10 des Fahrzeuginnenraumes einleitet. Zu diesem Zweck weist der Klimakanal 9 ein Mündungsteil bzw. einen Kanalaustritt 11 auf, durch den die klimatisierte Luft in den Fußraum des Fahrzeugfonds 10 eintritt.

Der Klimakanal 9 weist zwischen den Sitzquerträgern 6 und 7 einen mit einer geschweiften Klammer gekennzeichneten Abschnitt 12 auf, der erfindungsgemäß ausschließlich aus einem schall- und schwingungsdämpfenden Material, z.B. aus einem offenporigen, weichen Adhäsivschaumstoff, besteht.

Entsprechend Fig. 1 ist dieser Kanalabschnitt 12 aus einem Kanalkörper 13 gebildet, der aus dem genannten schall- und schwingungsdämpfenden Werkstoff hergestellt ist. Dieser Kanalkörper 13 verbindet dabei den Kanalaustritt 11 mit einem Anschluß an die Klimatisierungseinrichtung bzw. mit einem zur Klimatisierungseinrichtung führenden, in herkömmlicher Weise hergestellten Kanalabschnitt 14.

Im Unterschied dazu wird der erfindungsgemäß ausgebildete Kanalabschnitt 12 entsprechend Fig. 2 durch eine in der Dämmschicht 5 des Bodenbelages 3 ausgesparte Ausnehmung 15 gebildet, in die stromauf der Anschluß an die Klimatisierungseinrichtung bzw. der Kanalabschnitt 14 und stromab der Kanalaustritt 11 einmünden. Es ist klar, daß diese Ausführungsform nur dann zweckmäßig ist, wenn die Dämmschicht 5 aus einem entsprechenden schall- und schwingungsdämpfenden Material besteht.

Beide Ausführungsformen bewirken im Bereich des Kanalkörpers 13 bzw. der Ausnehmung oder Aussparung 15 eine Körperschallentkopplung. Dabei wird die Körperschallübertragung einerseits vom herkömmlich ausgestalteten Kanalabschnitt 14 auf den Kanalaustritt 11 und von diesem auf die trittfeste Oberschicht 4 des Bodenbelages 3 sowie andererseits von der Bodenplatte 2 auf die trittfeste Oberschicht 4 des Bodenbelages 3 reduziert, wodurch sich der Schallpegel im Fahrzeuginnenraum verringert.

Da die Schalleinleitung durch den Klimakanal 9 in den Fahrzeuginnenraum hauptsächlich durch bzw. über den Kanalaustritt 11 erfolgt, reicht es aus, lediglich einen sich zwischen den Sitzquerträgern 6 und 7 des Vordersitzes erstreckenden Abschnitt des Klimakanals 9 erfindungsgemäß auszugestalten.

Um ein Eindringen von Feuchtigkeit in die Dämmschicht 5 zu verhindern, wird die Innenseite des Klimakanals 9, insbesondere im Bereich des Kanalabschnittes 12 verhautet.

Die Dämmschicht 5 endet entgegen der Fahrtrichtung 8 im Bereich der Fondsitze 16, von denen lediglich eine im Fußraum angeordnete dem Fahrzeuginnenraum zugewandte Stirnseite teilweise dargestellt ist.

## Patentansprüche

1. Fahrzeugboden eines Personenkraftwagens mit einer Bodenplatte (2), mit einem auf die Bodenplatte (2) aufgebrachten, schalldämmenden Bodenbelag (3) und mit einem Klimakanal (9), der sich im Bodenbelag (3) erstreckt, einen in den Fahrzeugfond (10) einmündenden Kanalaustritt (11) aufweist und klimatisierte Luft von einer Klimatisierungseinrichtung des Fahrzeuges in den Fahrzeugfond (10) leitet,
**dadurch gekennzeichnet,**
daß der Klimakanal (9) in einem sich zwischen Klimatisierungseinrichtung und Kanalaustritt (11) erstreckenden Abschnitt (12) ausschließlich aus einem schall- und schwingungsdämpfenden Material, z.B. aus einem offenporigen Schaumstoff, besteht.

2. Fahrzeugboden nach Anspruch 1,
**dadurch gekennzeichnet,**
daß der Klimakanalabschnitt (12) durch eine Aussparung (15) im Bodenbelag (3) gebildet ist, wobei der Bodenbelag (3) zumindest in diesem Bereich aus dem schall- und schwingungsdämpfenden Material besteht.

3. Fahrzeugboden nach Anspruch 1,
**dadurch gekennzeichnet,**
daß der Klimakanalabschnitt (12) durch einen Kanalkörper (13) aus dem schall- und schwingungsdämpfenden Material gebildet ist.

4. Fahrzeugboden nach einem der Ansprüche 1 bis 3,
**dadurch gekennzeichnet,**
daß als schall- und schwingungsdämpfendes Material ein weicher offenporiger Schaumstoff verwendet ist.

5. Fahrzeugboden nach einem der Ansprüche 1 bis 4,
**dadurch gekennzeichnet,**
daß als schall- und schwingungsdämpfendes Material ein weicher offenporiger Adhäsivschaum verwendet ist.

6. Fahrzeugboden nach einem der Ansprüche 1 bis 5,
**dadurch gekennzeichnet,**
daß ein als schall- und schwingungsdämpfendes Material verwendeter offenporiger Schaumstoff innen verhautet ist.

7. Fahrzeugboden nach einem der Ansprüche 1 bis 6,
**dadurch gekennzeichnet,**
daß sich der Klimakanalabschnitt (12) zwischen zwei Sitzquerträgern (6,7) erstreckt, die einen Vordersitz des Fahrzeuges unterstützen.
